# EUROPÄISCHE PATENTSCHRIFT

(11) **EP 4 095 523 B1**
(45) Veröffentlichungstag und Bekanntmachung des Hinweises auf die Patenterteilung: **23.07.2025**
(21) Anmeldenummer: 22175465.8
(22) Anmeldetag: 25.05.2022
(51) Int. Cl.: G01N 23/207, G01N 23/20025

(54) **RÖNTGENUNTERSUCHUNGSVORRICHTUNG**
X-RAY EXAMINATION APPARATUS
DISPOSITIF D'EXAMEN PAR RAYONS X

(30) Priorität: 27.05.2021 AT 504242021
(43) Veröffentlichungstag der Anmeldung: 30.11.2022
(73) Patentinhaber: Anton Paar GmbH, 8054 Graz (AT)
(72) Erfinder: Josef, Gautsch, 8044 Graz (AT); Gartler, Helmut, 8141 Premstätten (AT)
(74) Vertreter: Dilg, Haeusler, Schindelmann Patentanwaltsgesellschaft mbH

(56) Entgegenhaltungen:
- WO-A2-01/46677
- JP-A- H03 216 539
- US-A- 3 105 902

## Beschreibung

### Technisches Gebiet

Die vorliegende Erfindung betrifft eine Vorrichtung zur Untersuchung einer Probe mittels Röntgenstrahlung und betrifft ferner ein Verfahren zur Herstellung einer Vorrichtung zur Untersuchung einer Probe mittels Röntgenstrahlung.

### Hintergrund der Erfindung

Apparaturen zum Untersuchen verschiedener Proben mittels Röntgenstrahlung sind aus dem Stand der Technik bekannt.

Das Dokument US 4,263,510 offenbart einen kombinierten Röntgenbeugungs-und Fluoreszenz-Spektroskopieapparat mit einer umgebungsmäßig steuerbaren Kammer. Benutzung einer umgebungsmäßig steuerbaren Kammer kann die Empfindlichkeit erhöhen, so dass Elemente mit niedrigen Ordnungszahlen in einer verbesserten Weise vermessen werden können. Der Apparat weist eine relativ hohe Anzahl von Dichtungselementen auf und hat eine hohe Komplexität. Ferner ist der Bereich vermessbarer Streuwinkel begrenzt.

Das Dokument US 2017/0356862 A1 offenbart eine Messkammer für ein kompaktes Goniometer in einem Röntgenspektrometer. Ein erster Goniometerarm hält einen Analysatorkristall und ein zweiter Goniometerarm hält einen Röntgendetektor. Die Messkammer umfasst eine Eingangsöffnung zum Eintritt von Röntgenfluoreszenzstrahlung in die Messkammer. Die Messkammer ist dadurch gekennzeichnet, dass sie einen Lagerblock zum Aufnehmen und Halten beider Goniometerarme in einer konzentrischen und drehbaren Weise aufweist. Die Vorrichtung ist jedoch sehr voluminös und sowohl der Detektor als auch die Probe drehen sich während einer Messung. Für bestimmte Probentypen ist jedoch die Drehung der Probe während der Messung nachteilhaft und kann Messergebnisse verfälschen.

WO 01/46677 A2 offenbart eine Vorrichtung zur Untersuchung einer Probe mittels Röntgenstrahlung, aufweisend eine flexible Balgverbindung.

Es ist somit eine Aufgabe der vorliegenden Erfindung, eine Vorrichtung zur Untersuchung einer Probe mittels Röntgenstrahlung bereitzustellen, wobei der messbare Streuwinkelbereich relativ groß ist bzw. ausreichend groß ist, wobei die Vorrichtung kompakt und insbesondere aus wenigen Teilen zusammengesetzt ist und ferner ermöglicht ist, dass verschiedene Probentypen in zuverlässiger Weise vermessbar sind.

Es ist auch Aufgabe der vorliegenden Erfindung, ein Röntgendiffraktometer mit einfach wechselbarer Vakuumkammer bereitzustellen.

### Zusammenfassung der Erfindung

Die Aufgabe wird durch den Gegenstand des unabhängigen Anspruchs gelöst. Die abhängigen Ansprüche spezifizieren besondere Ausführungsformen der vorliegenden Erfindung.

Gemäß einer Ausführungsform der vorliegenden Erfindung ist eine Vorrichtung zur Untersuchung einer Probe mittels Röntgenstrahlung bereitgestellt, aufweisend ein Strahlungserzeugungssystem zum Erzeugen von primärer Strahlung; einen ersten Goniometerarm, an dem das Strahlungserzeugungssystem montiert ist und der um eine Goniometerachse verschwenkbar ist; ein Detektionssystem, das zum Detektieren von von der Probe ausgehender sekundärer Strahlung ausgebildet ist; einen zweiten Goniometerarm, an dem das Detektionssystem montiert ist und der um die Goniometerachse verschwenkbar ist; eine evakuierbare Probenkammer, innerhalb derer die Probe in einem einen Teil der Goniometerachse umfassenden Probenbereich anordenbar ist, wobei die Probenkammer mittels einer Probenkammerwand begrenzt ist, die einen für die primäre Strahlung durchlässigen und vakuumdichten Durchstrahlungsbereich aufweist, um zu ermöglichen, dass die primäre Strahlung in die Probenkammer hinein eindringen kann und in den Probenbereich unter verschiedenen Einfallswinkeln treffen kann. Dabei weist die Probenkammer in einem Detektionsstrahlengang eine erste Öffnung auf, bei der die Probenkammer und das Detektionssystem vakuumdicht verbindbar sind, sodass der Detektionsstrahlengang evakuierbar ist.

Das Strahlungserzeugungssystem kann eine Röntgenröhre aufweisen, wobei Elektronen aus einer Glühwendel (Kathode) austreten und auf eine als Metallblock ausgeführte Anode treffen. Aufgrund der Abbremsung der Elektronen kann Bremsstrahlung erzeugt werden. Ferner können durch Elektronenstöße Elektronen aus den Schalen der Metallatome herausgeschlagen werden. Elektronen aus höheren Atomschalen fallen in die niederenergetischen Schalen zurück, wodurch charakteristische Röntgenstrahlung ausgesendet wird. Die Anode kann zum Beispiel Molybdän, Kupfer, Wolfram, Kobalt, Chrom oder eine Kombination davon aufweisen. Insbesondere kann die primäre Strahlung charakteristische Kupferlinien insbesondere Kupfer Ka-Strahlung, Kobalt Ka-Strahlung oder Chrom Ka-Strahlung umfassen. Die Wellenlänge der primären Strahlung kann zum Beispiel zwischen 10 nm und 5 pm liegen. Die Energie der primären Strahlung kann zum Beispiel zwischen 1 keV bis 50 keV liegen.
Das Strahlungserzeugungssystem kann eine Strahlformungsoptik und/oder ein oder mehrere Filter aufweisen. Das Strahlungserzeugungssystem kann ausgebildet sein, einen Strahl primärer Strahlung von einer gewünschten Querschnittsgröße, einem gewünschten Querschnittsprofil und/oder gewünschter Wellenlänge bzw. gewünschtem Wellenlängenbereich zu erzeugen.

Das Strahlungserzeugungssystem kann insbesondere unter Umgebungsdruck, d.h. normalem Atmosphärendruck, betrieben werden, somit in einem Druckbereich z.B. zwischen 950 mbar und 1050 mbar betrieben werden. Das Strahlungserzeugungssystem kann an dem ersten Goniometer derart montiert sein, dass die erzeugte primäre Strahlung für jeden eingestellten Schwenkwinkel auf den Probenbereich innerhalb der Goniometerachse gerichtet ist. Somit können verschiedene Einfallswinkel der primären Strahlung auf eine Probe eingestellt werden, die in dem Probenbereich (einem Bereich der Goniometerachse umfassen) angeordnet werden kann.

Die sekundäre Strahlung kann im Wesentlichen dieselbe Wellenlänge bzw. denselben Wellenlängenbereich aufweisen wie die primäre Strahlung, kann somit insbesondere durch elastische Wechselwirkung der primären Strahlung mit der Probe gebildet sein und kann somit Streustrahlung, insbesondere elastische Streustrahlung umfassen. In anderen Ausführungsformen kann die sekundäre Strahlung andere Wellenlängen bzw. andere Wellenlängenbereiche bzw. einen anderen Wellenlängenbereich aufweisen, als derjenige, der die primäre Strahlung charakterisiert. Durch Bestrahlen der Probe mit der primären Strahlung kann z.B. Röntgenfluoreszenz angeregt werden, so dass die sekundäre Strahlung zumindest teilweise Fluoreszenzstrahlung umfasst, die von einer Probe ausgehen kann, bzw. bestrahlt wird.

Das Detektionssystem kann im einfachsten Falle zum Beispiel durch einen Punktdetektor ausgeführt sein oder auch durch zweidimensionale oder dreidimensionale Felder von Detektionselementen, welche individuell auslesbar sind. Mittels Verschwenkens des zweiten Goniometers kann das Detektionssystem derart verschwenkbar sein, dass aus dem Probenbereich herrührende sekundäre Strahlung, die unter verschiedenen Ausfallswinkeln austritt, mittels des Detektionssystems detektierbar ist. Somit ermöglicht die Vorrichtung einen Einfallswinkel der auf die Probe auftreffenden primären Strahlung in einem bestimmten Bereich einzustellen und kann weiterhin ermöglichen, sekundäre Strahlung, welche in einem bestimmten Bereich von Ausfallswinkeln aus dem Probenbereich austritt, zu detektieren.

Die Probenkammer ist in dem Sinne evakuierbar, als innerhalb der Probenkammer ein Druck erreicht werden kann, welcher niedriger als ein Umgebungsdruck oder Atmosphärendruck ist, insbesondere ein Druck von zum Beispiel weniger als 100 mbar oder weniger als 50 mbar oder weniger als 30 mbar oder sogar weniger als 10 mbar. Der erniedrigte Druck innerhalb der Probenkammer entspricht einer erniedrigten Luftdichte relativ zu einer Atmosphärenluftdichte. Aufgrund der verminderten Luftdichte ist eine Absorption von Röntgenstrahlung bzw. sekundärer Strahlung, welche von der Probe ausgeht und zur Detektion in das Detektionssystem fällt, vermindert. Insbesondere kann entlang des gesamten Detektionsstrahlenganges, d.h. zwischen der in dem Probenbereich angeordneten Probe und einem Sensor oder einem Detektionselement des Detektionssystems ein Vakuum herrschen, das im Wesentlichen dem Vakuum innerhalb der Probenkammer entspricht oder gleicht. Aufgrund der damit erreichten verminderten Absorption der sekundären Strahlung kann eine Messempfindlichkeit der Vorrichtung im Vergleich zum Stand der Technik verbessert sein.

Die Vorrichtung kann ferner ein Justiersystem umfassen, um die Probe (welche z.B. in einem Probenhalter aufgenommen ist oder mittels eines Probenhalters gehaltert ist), in einer vorbestimmten oder gewünschten Weise räumlich relativ zu der Goniometerachse bzw. dem Probenbereich anzuordnen. Zum Beispiel kann eine Oberfläche der Probe oder ein zentraler Bereich der Probe adjustiert werden, dass der Oberflächenbereich bzw. der zentrale Bereich der Probe in einem Teil der Goniometerachse zu liegen kommt. Auf diesem Teil der Goniometerachse (insbesondere Probenbereich) kann auch die primäre Strahlung für alle verschiedenen Einfallswinkel gerichtet sein. Ebenfalls kann für alle verschiedenen Verschwenkungswinkel des Detektionssystems die aus diesem Teil der Goniometerachse ausgehende oder herrührende sekundäre Strahlung von dem Detektionssystem detektierbar sein.

Die Probenkammer kann einen Probeninnenraum aufweisen, in welchem während der Messung die Probe angeordnet ist. Die Probe kann während der Messung eine fixe Lage haben und kann an einer Basiskomponente (z.B. über eine Probenhalteaufnahme und/oder Probenhalter) befestigt bzw. gehaltert sein. Die Probenkammer kann relativ zu der Basiskomponente bzw. der Probenhalteraufnahme bzw. dem Probenhalter beweglich sein, insbesondere drehbar sein, insbesondere um die Goniometerachse drehbar sein. Um einen gewünschten Ausfallswinkel zur Detektion einstellen zu können, kann die Probenkammer zusammen mit dem Detektionssystem verschwenkt werden. Die Probenkammer kann somit synchron mit dem Detektionssystem, wenn dieses mit der Probenkammer verbunden ist, verschwenkt bzw. rotiert werden. Bei Verschwenken des Detektionssystems mittels Verschwenkens des zweiten Goniometerarms (z.B. mittels eines Motors oder Aktuators) kann über ein Verbindungssystem ein Drehmoment auf die Probenkammer ausgeübt werden, um die Probenkammer im Wesentlichen synchron mit dem Detektionssystem zu verschwenken.

Sowohl das Strahlungserzeugungssystem als auch das Detektionssystem kann mittels hochpräzise gelagerter Goniometerarme in hochpräziser Weise einen gewünschten Einfallswinkel bzw. Ausfallswinkel einzustellen ausgebildet sein. Zum Beispiel kann Einfallswinkel und/oder Ausfallswinkel mit einer Genauigkeit von zum Beispiel 1/100 Grad oder besser als 1/100 Grad oder 1/1000 Grad oder besser als 1/1000 Grad oder 1/1000 Grad bis ein 1/10.000 Grad einstellbar sein.

Die Probenkammer kann während einer Messung um die Goniometerachse verschwenkbar sein, welche insbesondere konzentrisch zu einer unten im Detail beschriebenen zweiten Öffnung angeordnet sein kann. Auch wenn es besonders vorteilhaft ist, eine Messung mit innerhalb der Probenkammer befindlichen Probe und bei evakuierter Probenkammer vorzunehmen, kann eine Messung auch in bestimmten Fällen ohne eine Probenkammer durchgeführt werden. In diesem Falle muss der Detektionsstrahlengang nicht notwendigerweise evakuiert sein.

Die Probenkammer bzw. die Probenkammerwand kann im Wesentlichen aus Metall, z.B. Stahl, gefertigt sein. Der Durchstrahlungsbereich kann erlauben, dass außerhalb der Probenkammer erzeugte primäre Strahlung in einen Innenraum der Probenkammer einfällt, insbesondere ermöglichen, dass die primäre Strahlung unter verschiedenen Einfallswinkeln auf den Probenbereich innerhalb der Probenkammer einfällt bzw. auftrifft. Der Durchstrahlungsbereich kann aus einem oder mehreren Materialien gefertigt sein, welche für die primäre Strahlung durchlässig sind bzw. eine geringe Abschwächung bewirken. Für die primäre Strahlung durchlässig kann bedeuten, dass zum Beispiel zwischen 50% und 80% einer Intensität stromaufwärts des Durchstrahlungsbereichs nach stromabwärts des Durchstrahlungsbereichs passieren können. Der Durchstrahlungsbereich kann im Wesentlichen dicht für Luft sein und gegenüber zum Beispiel anderen Materialien der Probenkammerwand mittels Dichtungselementen, z.B. elastischen Dichtungselementen wie Gummidichtungen abgedichtet sein. Die Probenkammer kann optional auch ein Sichtfenster zum Beispiel an einer Stirnseite aufweisen, was einem Benutzer ermöglicht, den Probenbereich bzw. die Probe innerhalb der Probenkammer zu inspizieren. Die Probenkammer kann zum Beispiel auch eine Tür umfassen, um zum Beispiel die Probe in die Probenkammer einzubringen zu können. Damit kann eine kompakte Vorrichtung bereitgestellt werden, wobei eine Vermessung einer Probe mittels Röntgenstrahlung mit hoher Sensitivität und über einen großen Streuwinkelbereich durchgeführt werden kann.

Gemäß einer Ausführungsform der vorliegenden Erfindung weist die Vorrichtung ferner ein Verbindungssystem auf, das zum lösbaren vakuumdichten, insbesondere elastischen oder starren, Verbinden der Probenkammer mit dem Detektionssystem bei der ersten Öffnung ausgebildet ist, wobei das Verbindungssystem zumindest ein erstes Dichtungselement aufweist, wobei die erste Öffnung insbesondere kreisförmig oder rechteckig ist.

Das lösbare Verbinden mittels des Verbindungssystems ermöglicht, die Probenkammer von dem Detektionssystem zu trennen. Somit kann auch ermöglicht sein, dass die Probenkammer entfernt werden kann, so dass zum Beispiel auch der Probenbereich einem Umgebungsdruck ausgesetzt sein kann. Das Verbindungssystem kann ein oder mehrere Teile umfassen. Das Verbindungssystem kann zum Beispiel einen Vakuumflansch umfassen und/oder andere Elemente. Auch wenn die Probenkammer mittels des Verbindungssystems mit dem Detektionssystem verbunden ist, kann eine gewisse Flexibilität bzw. Beweglichkeit der Probenkammer relativ zu dem Detektionssystem ermöglicht sein, während jedoch eine vakuumdichte Verbindung sichergestellt sein kann. Aufgrund der (geringfügigen) relativen Beweglichkeit des Detektionssystems relativ zu der Probenkammer kann eine Überbestimmtheit des mechanischen Systems vermieden sein, insbesondere dann, wenn das Detektionssystem mittels des zweiten Goniometerarms durch ein hochpräzises Lager bzw. eine hochgenaue Beweglichkeit oder Verschwenkbarkeit gekennzeichnet ist. Trotz einer elastischen Verbindung zwischen der Probenkammer und dem Detektionssystem kann bei Verschwenken des Detektionssystems ein ausreichendes Drehmoment auf die Probenkammer ausgeübt werden, so dass die Probenkammer synchron mit dem Detektionssystem bei Verschwenken des Detektionssystems verdreht bzw. verschwenkt wird.

Das erste Dichtungselement kann eine oder mehrere Dichtungen umfassen, um eine vakuumdichte Verbindung zu ermöglichen.

Bei der ersten Öffnung kann zum Beispiel starr ein Vakuumflansch verbunden sein oder eine (elastisch verbundene) Hülse mit einem Flansch vorgesehen sein. An dem Flansch kann zum Beispiel das Detektionssystem elastisch bzw. vakuumdicht verbunden sein. Das Verbindungssystem kann zum Beispiel im Wesentlichen Zylindersymmetrie aufweisen. Das Verbindungssystem kann derart angeordnet sein, dass die sekundäre Strahlung entlang einer Längsachse des Verbindungssystems propagieren kann und zwar nach außerhalb der Probenkammer auf ein Sensorelement des Detektionssystems.

Gemäß einer Ausführungsform der vorliegenden Erfindung weist das Verbindungssystem ein Außengewinde und eine Überwurfmutter auf, wobei das zumindest eine erste Dichtungselement eine ringförmige Dichtung aus elastischem Material aufweist, die mittels der Überwurfmutter zur Abdichtung verpressbar ist, insbesondere zwischen gegenüberliegenden Stirnflächen.

Das Außengewinde kann ein Element des Detektionssystems sein oder kann ein Element zum Beispiel einer Hülse (oder eines Flansches) sein, welche innerhalb der ersten Öffnung angeordnet sein kann und vakuumdicht angeordnet sein kann. Die Überwurfmutter kann ebenfalls entweder ein Element des Detektionssystems sein oder zum Beispiel ein Element der oben genannten Hülse (oder eines Flansches) sein. Das Außengewinde zusammen mit der Überwurfmutter kann zum Beispiel als ein Bajonettverschluss ausgeführt sein. Dazu kann das Außengewinde ein spezielles Gewinde eines Bajonettverschlusses aufweisen. Durch Verschrauben der Überwurfmutter auf dem Außengewinde kann das Detektionssystem mit der Probenkammer lösbar und gleichzeitig vakuumdicht verbunden werden. Die ringförmige Dichtung des ersten Dichtungselements kann zum Beispiel zwischen einer Stirnfläche eines Elements des Detektionssystems und einer Stirnfläche eines Vakuumflansches zum Beispiel oder einer Hülse angeordnet und zusammengepresst sein, um eine Abdichtung zu gewährleisten.

Damit kann die Probenkammer auf einfache und kostengünstige Weise mit dem Detektionssystem lösbar verbunden werden.

Gemäß einer Ausführungsform der vorliegenden Erfindung weist das Verbindungssystem eine Hülse auf, die innerhalb der ersten Öffnung angeordnet ist, wobei das zumindest eine erste Dichtungselement eine weitere ringförmige Dichtung aus elastischem Material aufweist, die zwischen einer Innenoberfläche eines die erste Öffnung begrenzenden Bereichs der Probenkammerwand und einem Außenflächenbereich der Hülse angeordnet ist, wobei die Hülse insbesondere mittels der auf das Außengewinde aufgeschraubten Überwurfmutter mit dem Detektionssystem verbunden ist.

Die Probenkammer und das Detektionssystem können zum Beispiel auch durch Verschrauben von Flanschelementen verbindbar sein oder verbunden werden.

Eine Längsachse oder eine Achse der Hülse kann im Wesentlichen einer Propagationsrichtung der sekundären Strahlung entsprechen, welche mittels des Detektors detektiert wird, wenn ein bestimmter Ausfallswinkel eingestellt ist. Die weitere ringförmige Dichtung zwischen der Innenoberfläche eines die erste Öffnung begrenzenden Bereiches der Probenkammerwand und einem Außenflächenbereich der Hülse kann eine vakuumdichte Verbindung schaffen, kann jedoch eine gewisse relative Beweglichkeit oder Elastizität bzw. Toleranz zwischen Probenkammer und Detektionssystem ermöglichen. Damit kann ein Toleranzausgleich ermöglicht sein, um insbesondere mechanische Belastungen zu beschränken.

Die ringförmige Dichtung des ersten Dichtungselements kann eine Beweglichkeitstoleranz im Wesentlichen in Axialrichtung der Hülse ermöglichen. Die weitere ringförmige Dichtung des ersten Dichtungselements kann demgegenüber eine Beweglichkeitstoleranz zwischen Detektionssystem und Probenkammer in einer Richtung senkrecht zu der Axialrichtung der Hülse ermöglichen, insbesondere in einer Richtung, in der ein Drehmoment wirkt, wenn der Detektor zur Änderung des registrierbaren Ausfallwinkels verschwenkt wird, was zu einem im Wesentlichen synchronen Mitführen der Probenkammer führt.

Gemäß einer Ausführungsform der vorliegenden Erfindung weist der Durchstrahlungsbereich einen Öffnungswinkel von zwischen 100° bis 165°, ferner insbesondere zwischen 120° bis 165°, noch ferner insbesondere zwischen 140° bis 165° auf und/oder wobei der Durchstrahlungsbereich aus Röntgenstrahlung durchlässigem Material, insbesondere Kunststoff und/oder Beryllium und/oder Leichtmetall und/oder Graphit und/oder Aluminium aufweisend, ausgebildet ist,
wobei der Durchstrahlungsbereich insbesondere als ein Segment einer Zylindermantelfläche gebildet ist, wobei eine Zylindersymmetrieachse im Wesentlichen in der Goniometerachse liegt.

Der Öffnungswinkel des Durchstrahlungsbereichs kann die Winkelausdehnung des Durchstrahlungsbereichs messen, insbesondere die Winkelausdehnung des Durchstrahlungsbereichs bezüglich der Goniometerachse. Wird zum Beispiel in einer Bragg-Brentano-Geometrie gemessen, so kann der Öffnungswinkel des Durchstrahlungsbereichs zum Beispiel dem Doppelten des maximalen Einfallswinkels entsprechen, was ebenfalls dem Doppelten des maximalen Ausfallswinkels entsprechen kann. In der Bragg-Brentano-Geometrie werden sowohl das Strahlungserzeugungssystem als auch das Detektionssystem gegensinnig um den gleichen Winkel aus einer Nullposition verschwenkt.

Der Durchstrahlungsbereich kann zum Beispiel als ein Kreisbogensegment ausgebildet sein, wobei das Bogensegment eine Winkelausdehnung zwischen 100° bis 165° hat. Bei einer Winkelausdehnung (bzw. Öffnungswinkel) zum Beispiel von 140° kann in der Bragg-Brentano-Geometrie ein Einfallswinkel von 70° und auch ein Ausfallswinkel von 70° erreicht werden.

Ist die Winkelausdehnung bzw. der Öffnungswinkel sogar 165°, so kann zum Beispiel in der Bragg-Brentano-Geometrie ein Einfallswinkel von 82,5° und auch ein Ausfallswinkel von 82,5° erreicht werden. Damit ist eine genaue Vermessung der Probe ermöglicht.

Der Durchstrahlungsbereich kann aus einem anderen Material gefertigt sein als andere Teile der Probenkammerwand, welche z.B. aus Stahl gefertigt sein können. Zwischen dem Material des Durchstrahlungsbereichs und dem Material der Probenkammerwand können Dichtungselemente z.B. in Form von Dichtungslippen vorgesehen sein.

Gemäß einer Ausführungsform der vorliegenden Erfindung weist die Vorrichtung zumindest eines der Folgenden auf: eine Probenhalteraufnahme, insbesondere höhenverstellbar, die ausgebildet ist, einen Probenhalter aufzunehmen; und/oder einen Probenhalter, der mittels der Probenhalteraufnahme oder einer feststehenden Basiskomponente halterbar ist und der ausgebildet und angeordnet ist, um die Probe in dem Probenbereich zu halten.

Die Probenhalteraufnahme kann ausgebildet sein, verschiedene Typen von Probenhaltern aufzunehmen, um diese wiederum während der Messung in einer fixen Position und Orientierung zu halten. Die Probenhalteraufnahme kann eine Längsachse aufweisen, welche im Wesentlichen entlang oder kollinear mit der Goniometerachse verläuft. Eine Längsrichtung der Probenhalteaufnahme kann in ihrer Position fein justierbar sein und/oder grob justierbar sein, um zum Beispiel eine Höhe einzustellen oder eine Einstellung in einer anderen lateralen Richtung zu ermöglichen. Die Probenhalteraufnahme wiederum kann ein Teil einer Basiskomponente sein oder kann an einer Basiskomponente, insbesondere feststehenden Basiskomponente, montiert sein.

Es können ein oder mehrere Probenhalter bereitgestellt sein, insbesondere um verschiedene Typen von Proben zu unterstützen. Der Probenhalter kann zum Beispiel eine Kapillare umfassen, um eine flüssige Probe zu beinhalten. Die Probe kann ein Feststoff, ein Pulver, polykristallin, kristallin sein, kann eine Flüssigkeit und/oder kann einen Einkristall umfassen. Der Probenhalter selbst kann, muss jedoch nicht höhenverstellbar bzw. lateral verstellbar sein. Der Probenhalter kann zum Beispiel einen Probenbehälter umfassen (beispielsweise für eine Flüssigkeit und/oder ein Pulver) oder kann zum Beispiel ein Substrat oder ein flächiges Element umfassen, auf dem eine feste Probe fixiert werden kann. Somit sind verschiedene Probentypen unterstützt. Insbesondere kann während der Messung die Probenhalteraufnahme bzw. der Probenhalter in einer fixen Positionierung und Orientierung gehalten werden.

Gemäß einer Ausführungsform der vorliegenden Erfindung umfasst die Probenkammer eine zweite Öffnung, durch die sich eine feststehende Basiskomponente und/oder die Probenhalteraufnahme und/oder der Probenhalter zumindest teilweise erstreckt, wobei die Vorrichtung ferner zumindest ein zweites Dichtungselement, insbesondere ringförmig, aus elastischem Material aufweist, das zwischen einem äußeren Oberflächenbereich der Basiskomponente und/oder der Probenhalteraufnahme und/oder des Probenhalters und einem inneren die zweite Öffnung begrenzenden Oberflächenbereich der Probenkammerwand zum Abdichten angeordnet ist, wobei die Probenkammer insbesondere abnehmbar ist.

Über die zweite Öffnung kann die Probenkammer drehbar (und vakuumdicht) mit der feststehenden Basiskomponente und/oder der Probenhalteraufnahme verbunden werden. Eine Probenhalteraufnahme kann zum Beispiel teilweise oder vollständig durch die zweite Öffnung in die Probenkammer hineinragen, so dass die Probenhalteraufnahme oder der Probenhalter in dem Probenbereich angeordnet ist, bzw. derart, dass die auf oder in dem Probenhalter befindliche Probe in dem Probenbereich gehalten ist.

Das zweite Dichtungselement kann im Wesentlichen konzentrisch zu der Goniometerachse angeordnet werden und kann eine vakuumdichte Verbindung zwischen der Basiskomponente und/oder der Probenhalteraufnahme und/oder Probenhalter einerseits und der Vakuumkammer andererseits ermöglichen, wobei eine drehbare Verbindung bzw. Kopplung zwischen Probenkammer einerseits und der Basiskomponente bzw. der Probenhalteraufnahme bzw. dem Probenhalter erreicht ist. Bei Verschwenkung der Probenkammer erfolgt eine Reibung zwischen dem inneren, die zweite Öffnung begrenzenden Oberflächenbereich der Probenkammerwand und einer äußeren Oberfläche des zweiten Dichtungselements. In einem Kontaktbereich kann zum Beispiel ein Schmiermittel, wie vakuumtaugliches Fett, vorgesehen sein, um einen Reibungswiderstand zu vermindern bzw. auch einen Abrieb zu reduzieren. Das zweite Dichtungselement kann eine vakuumdichte Verbindung und weiterhin eine Drehbarkeit der Probenkammer relativ zu der Basiskomponente ermöglichen. Die Probenkammer kann abnehmbar sein, um zum Beispiel einen Probenhalter oder eine Probe auf der Probenhalteraufnahme bzw. in dem Probenhalter oder an dem Probenhalter zu montieren.

Die zweite Öffnung kann zum Beispiel kreisförmig sein. Ebenso kann das zweite Dichtungselement kreisförmig und im Wesentlichen konzentrisch zu der Goniometerachse angeordnet sein. Damit ist eine Abdichtung gegen Lufteintritt ermöglicht bzw. zusätzlich eine Verdrehbarkeit der Probenkammer relativ zur feststehenden Basiskomponente.

Gemäß einer Ausführungsform der vorliegenden Erfindung ist die ringförmige Dichtung und/oder die weitere ringförmige Dichtung des zumindest einen ersten Dichtungselements und/oder das zweite Dichtungselement konzentrisch angeordnet und kreisförmig ist und/oder zumindest eines der Folgenden aufweist: eine Lippendichtung, einen O-Ring, eine Wellendichtung, einen Gleitring. Das zweite Dichtungselement kann insbesondere konzentrisch zu der Goniometerachse angeordnet sein. Damit sind verschiedene Typen von Dichtungselementen unterstützt, die je nach spezifischen Anforderungen ausgewählt werden können.

Gemäß einer Ausführungsform der vorliegenden Erfindung weist die Vorrichtung ferner ein Lager auf, das zum drehbaren Lagern der Probenkammer relativ zu der Probenhalteraufnahme und/oder Probenhalter und/oder einer feststehenden Basiskomponente ausgebildet ist, wobei das Lager insbesondere außerhalb der Probenkammer dem Umgebungsdruck ausgesetzt ist.

Das Lager kann zum Beispiel ein Kugellager, ein Gleitlager, ein Rollenlager oder eine Kombination davon umfassen. Das Lager kann die Probenkammer in einer definierten geometrischen Lage halten und ermöglichen, dass die Probenkammer relativ zu der feststehenden Basiskomponente verdrehbar ist. In anderen Ausführungsformen braucht die Vorrichtung kein solches Lager aufzuweisen. Wenn ein Lager vorgesehen ist, kann jedoch eine Abdichtung verbessert werden, da das zweite Dichtungselement nicht ausschließlich für die beabsichtigte oder gewünschte Führung der Probenkammer verwendet wird. Eine Führung der Verschwenkung der Probenkammer wird vielmehr durch das Lager bewirkt. Insbesondere kann durch das Lager somit erreicht werden, dass die Probenkammer bzw. insbesondere die zweite Öffnung, während des Verschwenkens stets konzentrisch zur Goniometerachse positioniert bleibt.

Gemäß einer Ausführungsform der vorliegenden Erfindung ist das zweite Dichtungselement zwischen dem Lager und einem Probenkammerinnenraum angeordnet. Das Lager kann somit dem Umgebungsdruck ausgesetzt sein und außerhalb der Probenkammer angeordnet sein. Das Lager kann geschmiert sein, ohne das Vakuum im Innenraum der Probenkammer zu verunreinigen bzw. zu verschlechtern. Somit können auch herkömmliche Lager unterstützt sein.

Gemäß einer Ausführungsform der vorliegenden Erfindung weist die Vorrichtung ferner auf: einen ersten Aktuator, der zum Verschwenken des Strahlungserzeugungssystems mittels des ersten Goniometerarms ausgebildet ist; einen zweiten Aktuator, der zum Verschwenken des Detektionssystems zusammen mit der damit verbundenen Probenkammer mittels des zweiten Goniometerarms ausgebildet ist,
wobei der erste Aktuator und/oder der zweite Aktuator außerhalb der Probenkammer angeordnet ist.

Die Aktuatoren können insbesondere Elektromotoren umfassen, welche zum Beispiel auch ein Getriebe umfassen können. Der zweite Aktuator kann in seinem aufbringbaren Drehmoment derart bemessen sein, dass er nicht nur befähigt ist, das Detektionssystem mittels des Goniometerarms zu verschwenken, sondern auch zusammen mit dem Detektionssystem die damit verbundene Probenkammer zu verschwenken. Der zweite Aktuator kann über den Goniometerarm ein entsprechendes Drehmoment auf das Detektionssystem ausüben, welches aufgrund der Verbindung mit der Probenkammer ein Drehmoment auf die Probenkammer ausüben kann, so dass sich die Probenkammer synchron mit dem Detektionssystem verschwenkt bzw. verdreht, wenn der zweite Aktuator entsprechend angesteuert wird. Wenn die Aktuatoren außerhalb der Probenkammer angeordnet sind, können sie Umgebungsdruck ausgesetzt sein und können somit herkömmlich ausgeführt sein.

Gemäß einer Ausführungsform der vorliegenden Erfindung ist das Strahlungserzeugungssystem mittels Verschwenkens des ersten Goniometerarms um bis zu zwischen 60° und 82,5°, insbesondere bis zu zwischen 70° und 82,5°, aus einer Nullposition (0°) verschwenkbar und/oder wobei das Detektionssystem mittels Verschwenkens des zweiten Goniometerarms um bis zu zwischen 60° und 82,5°, insbesondere bis zu 70° und 82,5°, aus einer Nullposition (0°) entgegengesetzt zu einer Verschwenkrichtung des Strahlungserzeugungssystem verschwenkbar ist.

Somit können Einfallswinkel zum Beispiel zwischen 60° und 82,5° und auch Ausfallswinkel zum Beispiel zwischen 60° und 82,5° erreicht werden, um somit eine umfassende Vermessung einer Probe zu ermöglichen. Herkömmliche Apparaturen zur Vermessung von Proben mittels Röntgenstreuung können häufig nur kleinere Einfallswinkel bzw. Ausfallswinkel erreichen.

Gemäß einer Ausführungsform der vorliegenden Erfindung ist das Strahlungserzeugungssystem außerhalb der Probenkammer angeordnet und Umgebungsdruck ausgesetzt, und/oder wobei das Strahlungserzeugungssystem eine Strahlungsquelle und eine Optik aufweist, um die primäre Strahlung mit vorbestimmtem Wellenlängenbereich und/oder vorbestimmter Querschnittsgröße zu erzeugen.

Auch das Strahlungserzeugungssystem kann somit ein herkömmliches Strahlungserzeugungssystem sein. Die Vorrichtung kann ausgebildet sein, je nach Erfordernis, einen bestimmten Wellenlängenbereich oder eine bestimmte Querschnittsgröße und/oder auch Querschnittsprofil der primären Strahlung bereitzustellen. Damit sind verschiedene Messvarianten oder Messverfahren unterstützt.

Gemäß einer Ausführungsform der vorliegenden Erfindung weist die Vorrichtung ferner mindestens einen Vakuumanschluss an der Probenkammer und/oder an dem Detektionssystem auf und/oder mindestens eine Vakuumpumpe, die ausgebildet ist, einen Druck von kleiner als 30 mbar innerhalb der Probenkammer und/oder dem Detektionsstrahlengang zu erzeugen.

Damit kann eine Evakuierung des Innenraums der Probenkammer in zuverlässiger Weise erreicht werden. Der Druck kann mittels der Vakuumpumpe zum Beispiel zwischen 2 mbar und 10 mbar innerhalb der Probenkammer erreichen oder auch zwischen 1 mbar bis 10 mbar erreichen. Als eine Vakuumpumpe kann zum Beispiel eine Membranpumpe eingesetzt werden.

Eine Detektorfläche eines oder mehrerer Detektorelemente des Detektionssystems kann als Teil des Detektionsstrahlenganges evakuiert sein. Insbesondere muss vor einer Detektorfläche des Detektionssystems kein Fenster vorgesehen sein. Auch eine Elektronik oder Auswerte- oder Ausleseelektronik des Detektionssystems kann evakuierbar sein.

Gemäß einer Ausführungsform der vorliegenden Erfindung umfasst das Detektionssystem eine Detektionsoptik und/oder ein Filter und einen Detektor, wobei das Filter in dem Detektionsstrahlengang angeordnet ist, insbesondere bei der ersten Öffnung und/oder dem Befestigungselement.

Das Filter kann zum Beispiel vorgesehen sein, um unerwünschte Wellenlängen oder Strahlung unerwünschter Wellenlängen vor Auftreffen auf ein Detektionselement oder ein Sensorelement zu schwächen bzw. im Wesentlichen in der Intensität zu reduzieren zum Beispiel auf zwischen 0% und 10% der auf das Filter auftreffenden Intensität der jeweiligen Wellenlänge oder des jeweiligen Längenwellenbereiches. Das Filter kann zum Beispiel auch austauschbar sein, um eine anwendungsspezifische Filterung zu ermöglichen. Das Filter kann an irgendeiner Stelle innerhalb des Detektionsstrahlengangs angeordnet sein, zum Beispiel innerhalb der oben erwähnten Hülse oder in einem Eingangsbereich des Detektionssystems.

Gemäß einer Ausführungsform der vorliegenden Erfindung weist der Detektor des Detektionssystems ein zweidimensionales oder dreidimensionales Feld von Detektorelementen auf, die als Punktdetektionssystem oder Zeilendetektionssystem verwendet werden.

Die Detektorelemente können zum Beispiel CCD-Detektorelemente und/oder CMOS-Detektorelemente aufweisen. Eine Auswertesoftware oder Auswerteelektronik kann mehrere Detektorelemente derart verschalten bzw. ausgebildet sein, Intensitätssignale, welche von mehreren Detektorelementen herrühren, zu verrechnen, um zum Beispiel eine integrale registrierte Intensität zu ermitteln.

Gemäß einer Ausführungsform der vorliegenden Erfindung weist die Vorrichtung ferner eine Steuerung auf, die zur Durchführung einer Messung kommunikativ mit dem Strahlungserzeugungssystem und/oder dem ersten Aktuator und/oder dem Detektionssystem und/oder dem zweiten Aktuator und/oder der Vakuumpumpe verbunden ist, um Steuersignale zu übertragen und/oder Messsignale zu erhalten.

Die Steuerung kann zum Beispiel in Software und/oder Hardware implementiert werden. Es können verschiedene Programme vorgesehen sein und vorhanden sein, um verschiedene Messverfahren durchführen zu können.

Gemäß einer Ausführungsform der vorliegenden Erfindung ist die Vorrichtung ausgebildet, mindestens eines der folgenden Messverfahren durchzuführen: Röntgenbeugung (XRD), insbesondere in Bragg-Brentano-Geometrie, Röntgenfluoreszenzanalyse (XRF), Kleinwinkelröntgenbeugung (SAXS), jeweils in Reflexion und/oder Transmission, und/oder wobei die Goniometerachse im Wesentlichen horizontal oder vertikal verläuft, und/oder wobei die Probe ein Pulver und/oder einen Kristall und/oder viele Kristalle und/oder eine Flüssigkeit aufweist, und während der Messung unbeweglich ist, und/oder wobei die Probenkammer im Wesentlichen zylinderförmig ist.

Somit sind umfassende Untersuchungen an einer Verschiedenheit von Proben ermöglicht. Damit ist zum Beispiel eine Elementanalyse bzw. eine Analyse von chemischen Verbindungen ermöglicht. Die Probenkammer, welche im Wesentlichen zylinderförmig sein kann, kann die Zylinderachse im Wesentlichen auf der Goniometerachse angeordnet haben. Damit kann die Probenkammer in einfacher Weise hergestellt werden.

Es sollte verstanden werden, dass Merkmale, welche allein oder in irgendeiner Kombination im Zusammenhang mit einer Vorrichtung zur Untersuchung einer Probe mittels Röntgenstrahlung, erwähnt, erläutert, bereitgestellt oder eingesetzt wurden, ebenso, individuell oder in irgendeiner Kombination, auf eine evakuierbare Probenkammer für einer Vorrichtung zur Untersuchung einer Probe mittels Röntgenstrahlung angewendet werden können und umgekehrt, gemäß Ausführungsformen.

Gemäß einer Ausführungsform ist eine evakuierbare Probenkammer für eine Vorrichtung zur Untersuchung einer Probe mittels Röntgenstrahlung bereitgestellt. Die Probenkammer weist eine Probenkammerwand auf, die einen Probenkammerinnenraum begrenzt, innerhalb dessen die Probe in einem Probenbereich anordenbar ist, wobei die Probenkammerwand einen für die Röntgenstrahlung durchlässigen und vakuumdichten Durchstrahlungsbereich aufweist, um zu ermöglichen, dass die Röntgenstrahlung in die Probenkammer hinein eindringen kann und in den Probenbereich unter verschiedenen Einfallswinkeln treffen kann. Die Probenkammer weist eine erste Öffnung, z.B. in einem Detektionsstrahlengang, auf, bei der die Probenkammer und ein Detektionssystem vakuumdicht verbindbar sind, insbesondere mittels eines ein erstes Dichtungselement aufweisenden Verbindungssystems, sodass der Detektionsstrahlengang evakuierbar ist. Die Probenkammer weist eine zweite Öffnung auf und insbesondere ein zweites Dichtungselement, das bei einem inneren die zweite Öffnung begrenzenden Oberflächenbereich der Probenkammerwand zum Abdichten anordenbar ist. Der Durchstrahlungsbereich weist einen Öffnungswinkel von zwischen 100° bis 165°, insbesondere zwischen 120° bis 165°, ferner insbesondere zwischen 140° bis 165° auf, wobei der Durchstrahlungsbereich insbesondere als ein Segment einer Zylindermantelfläche gebildet ist.

Die Erfindung wird nun mit Bezug auf die beiliegenden Zeichnungen erläutert. Die Erfindung ist nicht auf die illustrierten oder beschriebenen Ausführungsformen begrenzt.

### Kurze Beschreibung der Zeichnung

Fig. 1A, 1B, 1C illustrieren in schematischer Weise eine Vorrichtung zur Untersuchung einer Probe mittels Röntgenstrahlung gemäß einer Ausführungsform der vorliegenden Erfindung in einer Referenzkonfiguration oder Null-Konfiguration;
Fig. 2A, 2B, 2C illustrieren schematisch die in Fig. 1A, 1B, 1C illustrierte Vorrichtung in einer weiteren Konfiguration während einer Messung;
Fig. 3 illustriert schematisch in einer Schnittansicht Verbindungselemente zum Verbinden einer Basiskomponente mit der Probenkammer;
Fig. 4 illustriert schematisch in einer Schnittansicht Verbindungselemente zum Verbinden eines Detektionssystems mit einer Probenkammer, wie sie für die in Fig. 1A, 1B, 1C, 2A, 2B, 2C illustrierte Vorrichtung eingesetzt werden können.

### Detaillierte Beschreibung

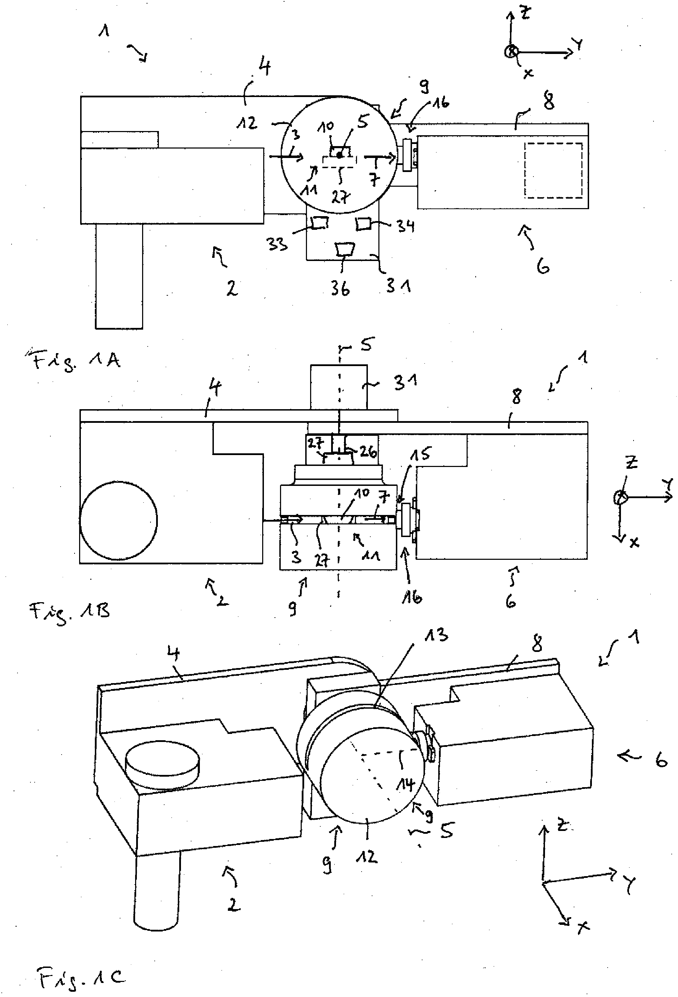

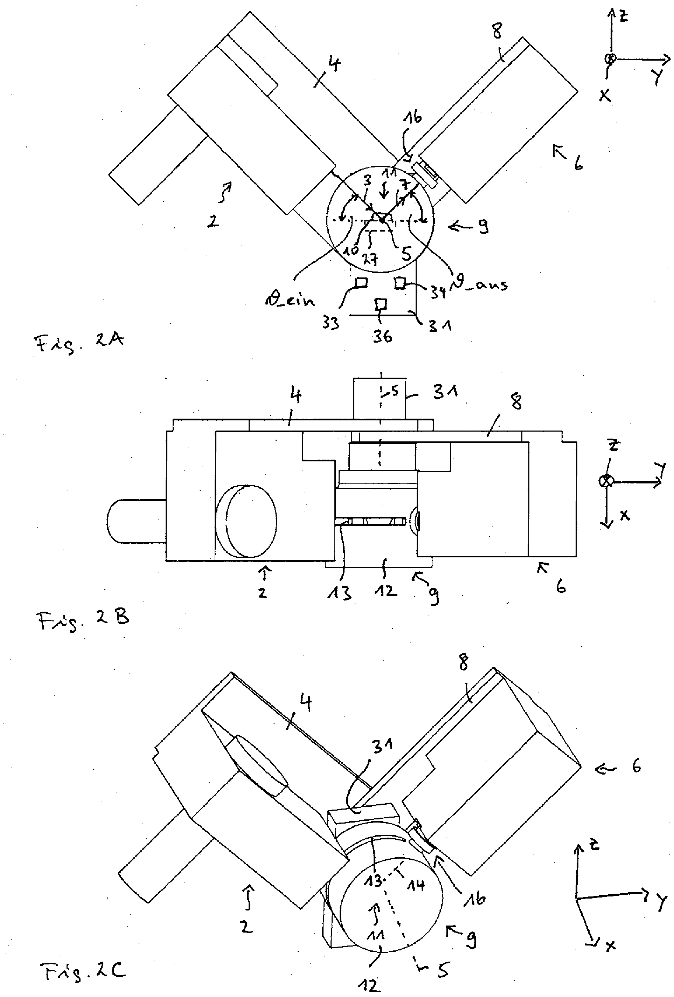

In Fig. 1A, 2A ist die Vorrichtung 1 zur Untersuchung einer Probe mittels Röntgenstrahlung gemäß einer Ausführungsform der vorliegenden Erfindung in Seitenansicht entlang einer x-Achse eines Koordinatensystems schematisch illustriert, in Fig. 1B, 2B ist die Vorrichtung 1 in einer Draufsicht entlang der z-Achse des Koordinatensystems und in Fig. 1C, 2C ist die Vorrichtung 1 in einer perspektivischen dreidimensionalen Darstellung schematisch illustriert, jeweils in zwei verschiedenen Messpositionen bzw. Messkonfigurationen.

Die Vorrichtung 1 umfasst ein Strahlungserzeugungssystem 2 zum Erzeugen von primärer Strahlung 3. Die Vorrichtung 1 umfasst ferner einen ersten Goniometerarm 4, an dem das Strahlungserzeugungssystem 2 montiert ist und der um eine Goniometerachse 5 verschwenkbar ist. Die Vorrichtung 1 umfasst ferner ein Detektionssystem 6, das zum Detektieren von von der Probe ausgehender sekundärer Strahlung 7 ausgebildet ist. Die Vorrichtung 1 umfasst ferner einen zweiten Goniometerarm 8, an dem das Detektionssystem 6 montiert ist und der um die Goniometerachse 5 verschwenkbar ist. Die Vorrichtung 1 umfasst ferner eine evakuierbare Probenkammer 9, innerhalb derer eine Probe 10 in einem Teil der Goniometerachse umfassenden Probenbereich 11 anordenbar ist. Dabei ist die Probenkammer 9 mittels einer Probenkammerwand 12 begrenzt, wobei die Probenkammerwand 12 einen für die primäre Strahlung 3 durchlässigen und vakuumdichten Durchstrahlungsbereich 13 aufweist, um zu ermöglichen, dass die primäre Strahlung 3 in die Probenkammer 9 hinein eindringen kann und in den Probenbereich 11 unter verschiedenen Einfallswinkeln θ_ein treffen kann. In der in Fig. 1A, 1B, 1C illustrierten Referenzkonfiguration oder Referenzposition bzw. Null-Position ist der Einfallswinkel θ_ein=0°, während der Einfallswinkel in der in Fig. 2A, 2B, 2C illustrierten Messkonfiguration bzw. Messposition ungleich null ist und ungefähr 45° beträgt.

Die Probenkammer 9 weist in einem Detektionsstrahlengang 14 eine erste Öffnung 15 auf, bei der die Probenkammer 9 und das Detektionssystem 6 vakuumdicht verbindbar sind, so dass der Detektionsstrahlengang 14 evakuierbar ist. Die Vorrichtung 1 weist ferner ein Verbindungssystem 16 auf, das zum lösbaren vakuumdichten insbesondere elastischen Verbinden der Probenkammer 9 mit dem Detektionssystem 6 bei der ersten Öffnung 15 ausgebildet ist.

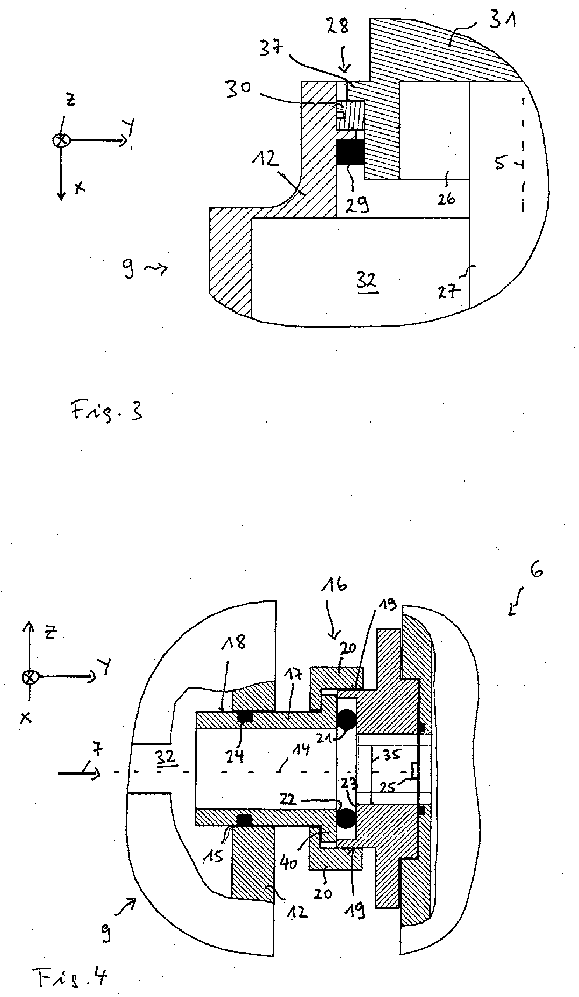

Das Verbindungssystem 16 ist in Fig. 4 in einer Schnittansicht durch eine Y-Z-Ebene in größerem Detail illustriert. Dabei ist auf der linken Seite der Fig. 4 ein Teil der Probenkammer 9 illustriert und auf der rechten Seite ist ein Teil des Detektionssystems 6 illustriert.

Das Verbindungssystem 16 weist ein Außengewinde 19 und eine Überwurfmutter 20 auf und ein erstes Dichtungselement weist eine ringförmige Dichtung 21 aus elastischem Material auf, die mittels der Überwurfmutter 20 zur Abdichtung verpressbar ist, und zwar zwischen gegenüberliegenden Stirnflächen 22 und 23.

Die Probenkammer 9 weist die erste Öffnung 15 auf. Innerhalb der ersten Öffnung 15 ist eine Hülse 17 angeordnet. In der illustrierten Ausführungsform ist die Stirnfläche 22 eine Stirnfläche oder Flanschfläche eines Flansches 40 der Hülse 17. Die Stirnfläche 23 ist ein Teil oder ein Element, welches dem Detektionssystem 6 zugeordnet ist. Beim Verschrauben der Überwurfmutter 20 an dem Außengewinde 19 wird die Flanschfläche 22 bzw. Stirnfläche 22 der Hülse 17 gegen die ringförmige Dichtung 21 gedrückt und führt somit zu einer vakuumdichten Verbindung. Die Überwurfmutter 20 greift in eine Rückfläche des Flansches 40 der Hülse 17 ein.

Eine weitere ringförmige Dichtung 24 (zu einem ersten Dichtungselement des Verbindungssystems 16 gehörig) ist zwischen einer Innenoberfläche eines die erste Öffnung begrenzenden Bereichs der Probenkammerwand 12 und einem Außenflächenbereich 18 der Hülse 17 angeordnet. Die Hülse 17 ist mittels der auf das Außengewinde 19 aufgeschraubten Überwurfmutter 20 mit dem Detektionssystem 6 verbindbar.

Der Detektionsstrahlengang 14 verläuft durch die Hülse 17 hindurch, um auf ein für die sekundäre Strahlung 7 empfindliches Detektorelement 25 des Detektionssystems 6 zu treffen und dort hinsichtlich seiner Intensität registriert zu werden. Der gesamte Detektionsstrahlengang 14 sowie auch insbesondere das Detektionselement 25 des Detektionssystems sind dabei von einem Umgebungsdruck evakuiert, wie ebenfalls die gesamte Probenkammer bzw. der Innenraum der Probenkammer 9.

Der Durchstrahlungsbereich 13 hat einen Öffnungswinkel a, der zum Beispiel zwischen 0° und 165° liegen kann. Der Durchstrahlungsbereich 13 verschließt die Probenkammer 9 vakuumdicht ist jedoch für Röntgenstrahlung durchlässig, d.h. weist relativ geringe Absorption für Röntgenstrahlung auf.

Die Vorrichtung umfasst ferner eine Probenhalteraufnahme 26. Die Probenhalteraufnahme 26 kann höhenverstellbar sein, d.h. in ihrer Position entlang der Z-Achse verstellbar sein. Die Probenhalteraufnahme erlaubt, einen Probenhalter 27 zu haltern, an dem bzw. auf dem eine Probe 10 montierbar oder halterbar ist.

Die Probenkammer 9 weist eine zweite Öffnung 27 auf, durch die sich eine feststehende Basiskomponente 31 und/oder die Probenhalteraufnahme 26 und/oder ein Probenhalter 27 zumindest teilweise erstreckt. Die Goniometerarme 4 und 8 sind verschwenkbar relativ zu der Basiskomponente 31, sowie auch relativ zu der Probenhalteraufnahme 26.

**Fig. 3** illustriert in einer schematischen Schnittansicht eines Schnittes durch die XY-Ebene einen Teil der Probenkammer 9, welche die Probenkammerwand 12 aufweist, sowie einen Teil der Basiskomponente 31, relativ zu welcher die Probenkammer 9 verschwenkbar ist. Zwischen einem äußeren Oberflächenbereich der Basiskomponente 28 und einem inneren die zweite Öffnung 28 begrenzenden Oberflächenbereich der Probenkammerwand 12 ist ein zweites Dichtungselement 29 zum Abdichten angeordnet. Das zweite Dichtungselement 29 kann zum Beispiel eine Lippendichtung aufweisen.

Ferner ist ein Lager 30 vorgesehen, das zum drehbaren Lagern der Probenkammer 9 relativ zu der Probenhalteraufnahme und/oder der feststehenden Basiskomponente 31 ausgebildet ist. Ein Probenkammerinnenraum 32 in einem Inneren der Probenkammer 9 ist evakuierbar. Das Lager 30 ist jedoch außerhalb der Probenkammer 9, d.h. außerhalb des Innenraumes 32 der Probenkammer 9 angeordnet und somit dem Umgebungsdruck ausgesetzt. Das zweite Dichtungselement 29 ist somit zwischen dem Lager 30 und dem Probenkammerinnenraum 32 angeordnet.

Ein erster Aktuator 33 (siehe Fig. 1A bis 2C) ist zum Verschwenken des Strahlungserzeugungssystems 2 mittels des ersten Goniometerarms 4 ausgebildet. Ein zweiter Aktuator 34 ist zum Verschwenken des Detektionssystems 6 zusammen mit der damit verbundenen Probenkammer 5 mittels des zweiten Goniometerarms 8 ausgebildet. Beide Aktuatoren 33, 34 sind außerhalb der Probenkammer 9 angeordnet. Mittels des Aktuators 33 und des ersten Goniometerarms 4 ist das Strahlungserzeugungssystem 2 um bis zu zwischen 60° und 82,5° verschwenkbar, um einen Einfallswinkel θ_ein in diesem Bereich nach Bedarf einstellen zu können.

Ähnlich kann das Detektionssystem 6 mittels Verschwenkens des zweiten Goniometerarms 8 (mittels des zweiten Aktuators 34) um bis zu 60° und 82,5° verschwenkt werden, um somit einen Einfallswinkel θ_aus in diesem Bereich nach Bedarf einstellen zu können.

Die Probenkammer 9 und/oder das Detektionssystem 6 können einen nicht im Detail illustrierten Vakuumanschluss aufweisen, mit dem eine Vakuumpumpe verbindbar sein kann, um einen Druck von <30 mbar in dem Probenkammerinnenraum 32 zu erzeugen.

Das Detektionssystem 6 kann eine Detektionsoptik und/oder ein Filter 35 aufweisen, welches zum Beispiel in Fig. 4 illustriert ist und in Propagationsrichtung der sekundären Strahlung 7 vor dem Detektionselement 25 des Detektionssystems 6 angeordnet ist. Das Filter 35 kann somit bei dem Befestigungselement 16 angeordnet sein oder zum Beispiel auch innerhalb der Hülse 17.

Die Vorrichtung 1 weist ferner eine Steuerung 36 auf, die zur Durchführung einer Messung kommunikativ mit dem Strahlungserzeugungssystem 2, dem ersten Aktuator 33, dem Detektionssystem 6, dem zweiten Aktuator 34 und mit einer nicht illustrierten Vakuumpumpe verbunden ist, um Steuersignale zu übertragen und/oder Messsignale zu erhalten und auszuwerten.

In der illustrierten Ausführungsform verläuft die Goniometerachse 5 in horizontaler Richtung.

Die in Fig. 1A, 1B, 1C, 2A, 2B, 2C illustrierte Vorrichtung wird gemäß einem Verfahren der vorliegenden Erfindung hergestellt. Dabei wird das Strahlungserzeugungssystem 2 an dem ersten Goniometerarm 4 montiert. Ferner wird das Detektionssystem 6 an dem zweiten Goniometerarm 8 montiert. Ferner wird die evakuierbare Probenkammer 9 bereitgestellt, die einen für primäre Strahlung durchlässigen und vakuumdichten Durchstrahlungsbereich 13 aufweist. Ferner wird die Probenkammer derart hergestellt, dass sie in einem Detektionsstrahlengang 14 eine erste Öffnung 15 aufweist, bei der die Probenkammer und das Detektionssystem insbesondere mittels des Verbindungssystems 16 vakuumdicht verbindbar sind.

Ausführungsformen der vorliegenden Erfindung können ein oder mehrere der folgenden Merkmale aufweisen:
1. Röntgenbeugung Bragg-Brentano-Diffraktometer (XRD) mit einer Winkelgenauigkeit von 1/10000°
   a. Beim Diffraktometer ist die Goniometerachse horizontal. Es ist jedoch auch möglich das Diffraktometer mit vertikaler Goniometerachse auszuführen.
   b. Es ist auch möglich das Gerät für Röntgenfluoreszenzanalyse (XRF) umzubauen.
2. Einheit Goniometer mit Strahlungsquelle
   a. Die Strahlungsquelle befindet sich außerhalb der Vakuumkammer auf einem Goniometerarm.
   b. Die Röntgenquelle dreht sich während der Messung via dem Goniometerarm. Daher besitzt die Vakuumkammer ein großes Fenster (ca. 160°) damit die Strahlung im richtigen Winkel auf die Probe treffen kann.
   c. Die Röntgenquelle kann ein Cu-K(alpha) Quelle sein, das Anodenmaterial kann auch Cr, Fe, Co, Cu, Mo, Ag sein
   d. Das Fenster ist aus Kunststoff oder Beryllium, wo bei Beryllium vermieden wird, da Berylliumverbindungen giftig sind.
3. Probe
   a. Die Probe kann ein Pulver, Kristall oder eine Flüssigkeit in einer Kapillare sein.
   b. Die Probe befindet sich in einer Vakuumkammer.
   c. Die Probe ist auf dem Probentisch auf der Position der Goniometerachse positioniert.
   d. Die Probe kann zur genaueren Positionierung vor der Messung in der Höhe verstellt werden.
   e. Während der Messung verändert die Probe nicht die Position.
4. Einheit Goniometer mit Detektor mit Vakuumkammer
   a. Der Detektorgoniometerarm ist mit der Vakuumkammer über eine lösbare Verbindung fix verbunden. Somit sind auch der Detektor fix mit der der Vakuumkammer verbunden. Dreht sich das Detektorgoniometer, so dreht sich auch die Vakuumkammer.
   b. Es gibt dadurch kein Fenster zwischen Probe und Detektor. Fenster schwächen bzw. streuen den Strahl von der Probe und erhöhen das Hintergrundsignal, dadurch verschlechtert sich das Messignal. Fenstermaterialien, mit wenig Dämpfung sind problematisch z.B. Beryllium ist giftig.
   c. Es ist die Vakuumkammer und der Detektor im selben Vakuum. Luft streut bzw. schwächt den Strahl ab, je weniger Luft, desto besser das Signal. Vakuumkammer und Detektor werden gleichzeitig evakuiert (schwaches Vakuum, 1-10 mbar).
   d. Der Vakuumanschluss kann sich an der Vakuumkammer und/oder beim Detektor befinden.
   e. Es gibt 2 Anschlüsse für das Vakuum, damit kann auch die Kammer mit Inertgas gefüllt bzw. gespült werden.
   f. Die Vakuumkammer ist drehbar gelagert (Lagerdurchmesser ca. 12 cm) und das Lager ist vakuumdicht (schleifende drehbare Dichtung).
   g. Da der Detektor auch im Vakuum ist, müssen die Detektoranschlüsse vakuumdicht ausgeführt sein.
   h. Dadurch, dass das Goniometer auch die Vakuumkammer dreht, ist das Goniometer und der Goniometerantrieb stärker (höheres Drehmoment) ausgelegt als normal (es gibt dazu spezielle Sicherheitsmaßnahmen). Das ist auch notwendig um die notwendige Präzision zu gewährleisten.
   i. Der Detektor ist an der Vakuumkammer angeflanscht. Es kann dadurch auch die Vakuumkammer entfernt werden, falls es für die Messung notwendig ist.
   j. Die Flanschverbindung zwischen Detektor und Vakuumkammer ist elastisch, damit kleine Unterschiede ausgeglichen werden können.
   k. Der Detektor ist ein 256 x 256 Pixel Detektor, welcher als Punktdetektor verwendet wird.

Die Vorrichtung zum Untersuchen einer Probe ist in einfacher Weise aufgebaut, und ermöglicht eine Vermessung über einen großen Winkelbereich. In dem Detektionsstrahlengang zwischen der Probe und dem Detektor müssen keine Fenster oder keine Luft vorhanden sein, damit das Signal von der Probe nicht unnötig abgeschwächt wird. Das Detektor-Goniometer kann doppelt gelagert sein, einmal über das herkömmliche Goniometerlager (ohne Dichtung) und das zweite Mal über das Lager bei der Vakuumkammer (mit drehbarer Lippendichtung). Der Detektor bzw. das Detektor-Goniometer sind mit einem Flansch miteinander verbunden, diese Verbindung ist dabei so ausgelegt, dass Toleranzen ausgeglichen werden können. Diese Verbindung ist lösbar und hat eine Vakuumdichtung, welche kleiner Bewegung ausgesetzt ist. Der Antrieb des zweiten Goniometerarms 8 ist stärker als konventionell ausgelegt, da dieser zweite Aktuator 34 auch die Probenkammer bzw. Vakuumkammer 9 mitdrehen muss.

Da sich bei der Erfindung kein Fenster zwischen Probe und Detektor befindet, kann auf den Beamstop verzichtet werden. Moderne Detektoren werden durch den auftreffenden primären Röntgenstrahl nicht geschädigt und sind teilweise in der Lage, die Primärintensität zu messen. Dies ermöglicht bessere Messergebnisse, da keine Streuung von Beamstop das Messergebnis beeinflusst.

Die vakuumdichte Probenkammer kann starr mit dem vakuumdichten Gehäuse für die Optik und dem Detektionssystem verbunden sein. Die vakuumdichte Probenkammer kann auf einer Vakuum-Drehdurchführung (wie z.B. in Fig. 3 illustriert) gelagert sein. Die Vakuum-Drehdurchführung kann sich auf einem Montageflansch 37 (z.B. Teil der Basiskomponente 31, siehe Fig. 3) befinden, der so angeordnet ist, dass die Vakuum-Drehdurchführung konzentrisch zur Goniometerachse 5 angeordnet ist.

Wird der Verschwenkungswinkel des Detektionssystems 6 verändert (Veränderung von θ_aus), dann dreht sich die vakuumdichte Probenkammer 9 mit. Der Durchstrahlungsbereich bzw. das Eintrittsfenster 13 an der Probenkammer 9 kann zum Beispiel einen möglichst großen Winkelbereich abdecken, damit der vermessbare Winkelbereich nicht eingeschränkt wird. In dem Detektionsstrahlengang 14, welcher durch die erste Öffnung 15 der Probenkammer verläuft, ist das Befestigungssystem 16 vorgesehen, um die vakuumdichte Probenkammer 9 mit dem vakuumdichten Optikgehäuse des Detektionssystems 6 vor der Optik zu verbinden. Somit ist gewährleistet, dass sich hinter der Probe, die sich an der Achse des Röntgen-Diffraktometers befindet, kein Fenster oder eine Luftstrecke befindet. In dem Befestigungssystem 16 bzw. dem Befestigungselement kann auch optional ein Filter 35 integriert werden, um beispielsweise mittels Nickel-Folie die Kβ-Strahlung bei einer Kupferröntgenquelle zu unterdrücken bzw. abzuschwächen.

## Patentansprüche

1. Vorrichtung (1) zur Untersuchung einer Probe (10) mittels Röntgenstrahlung, aufweisend:
ein Strahlungserzeugungssystem (2) zum Erzeugen von primärer Strahlung (3);
einen ersten Goniometerarm (4), an dem das Strahlungserzeugungssystem (2) montiert ist und der um eine Goniometerachse (5) verschwenkbar ist;
ein Detektionssystem (6), das zum Detektieren von von der Probe ausgehender sekundärer Strahlung (7) ausgebildet ist;
einen zweiten Goniometerarm (8), an dem das Detektionssystem (6) montiert ist und der um die Goniometerachse (5) verschwenkbar ist;
eine evakuierbare Probenkammer (9), innerhalb derer die Probe (10) in einem einen Teil der Goniometerachse umfassenden Probenbereich (11) anordenbar ist, wobei die Probenkammer (9) mittels einer Probenkammerwand (12) begrenzt ist, die einen für die primäre Strahlung (3) durchlässigen und vakuumdichten Durchstrahlungsbereich (13) aufweist, um zu ermöglichen, dass die primäre Strahlung (3) in die Probenkammer (9) hinein eindringen kann und in den Probenbereich (11) unter verschiedenen Einfallswinkeln (θ_ein) treffen kann;
wobei die Probenkammer (9) in einem Detektionsstrahlengang (14) eine erste Öffnung (15) aufweist, bei der die Probenkammer (9) und das Detektionssystem (6) vakuumdicht verbindbar sind, sodass der Detektionsstrahlengang (14) evakuierbar ist,
wobei der Durchstrahlungsbereich (13) die Probenkammer (9) vakuumdicht verschließt,
wobei der Durchstrahlungsbereich (13) einen Öffnungswinkel von zwischen 100° bis 165° aufweist,
wobei der Öffnungswinkel des Durchstrahlungsbereichs die Winkelausdehnung des Durchstrahlungsbereichs bezüglich der Goniometerachse misst.

2. Vorrichtung gemäß dem vorangehenden Anspruch, ferner aufweisend:
ein Verbindungssystem (16), das zum lösbaren vakuumdichten, insbesondere elastischen oder starren, Verbinden der Probenkammer (9) mit dem Detektionssystem (6) bei der ersten Öffnung (15) ausgebildet ist,
wobei das Verbindungssystem zumindest ein erstes Dichtungselement (21, 24) aufweist,
wobei die erste Öffnung (15) insbesondere kreisförmig oder rechteckig ist.

3. Vorrichtung gemäß dem vorangehenden Anspruch, wobei das Verbindungssystem (16) ein Außengewinde (19) und eine Überwurfmutter (20) aufweist, wobei das zumindest eine erste Dichtungselement eine ringförmige Dichtung (21) aus elastischem Material aufweist, die mittels der Überwurfmutter (20) zur Abdichtung verpressbar ist, insbesondere zwischen gegenüberliegenden Stirnflächen (22, 23).

4. Vorrichtung gemäß einem der zwei vorangehenden Ansprüche 2 oder 3,
wobei das Verbindungssystem (16) eine Hülse (17) aufweist, die innerhalb der ersten Öffnung (15) angeordnet ist, wobei das zumindest eine erste Dichtungselement eine weitere ringförmige Dichtung (24) aus elastischem Material aufweist, die zwischen einer Innenoberfläche eines die erste Öffnung begrenzenden Bereichs der Probenkammerwand (12) und einem Außenflächenbereich der Hülse (17) angeordnet ist,
wobei die Hülse (17) insbesondere mittels der auf das Außengewinde (19) aufgeschraubten Überwurfmutter (20) mit dem Detektionssystem (6) verbunden ist.

5. Vorrichtung gemäß einem der vorangehenden Ansprüche,
wobei der Durchstrahlungsbereich (13) einen Öffnungswinkel von zwischen 120° bis 165°, insbesondere zwischen 140° bis 165° aufweist und/oder
wobei der Durchstrahlungsbereich (13) aus Röntgenstrahlung durchlässigem Material, insbesondere Kunststoff und/oder Beryllium und/oder Leichtmetall und/oder Graphit und/oder Aluminium aufweisend, ausgebildet ist,
wobei der Durchstrahlungsbereich (13) insbesondere als ein Segment einer Zylindermantelfläche gebildet ist, wobei eine Zylindersymmetrieachse im Wesentlichen in der Goniometerachse (5) liegt.

6. Vorrichtung gemäß einem der vorangehenden Ansprüche, ferner zumindest eines der Folgenden aufweisend:
eine Probenhalteraufnahme (26), insbesondere höhenverstellbar, die ausgebildet ist, einen Probenhalter aufzunehmen; und/oder
einen Probenhalter (27), insbesondere höhenverstellbar, der mittels der Probenhalteraufnahme oder einer feststehenden Basiskomponente halterbar ist und der ausgebildet und angeordnet ist, um die Probe in dem Probenbereich (11) zu halten.

7. Vorrichtung gemäß einem der vorangehenden Ansprüche,
wobei die Probenkammer (9) eine zweite Öffnung (28) aufweist, durch die sich eine feststehende Basiskomponente (31) und/oder die Probenhalteraufnahme (26) und/oder der Probenhalter (27) zumindest teilweise erstreckt,
wobei die Vorrichtung ferner zumindest ein zweites Dichtungselement (29), insbesondere ringförmig, aus elastischem Material aufweist, das zwischen einem äußeren Oberflächenbereich der Basiskomponente (31) und/oder der Probenhalteraufnahme und/oder des Probenhalters und einem inneren die zweite Öffnung begrenzenden Oberflächenbereich der Probenkammerwand zum Abdichten angeordnet ist,
wobei die Probenkammer insbesondere abnehmbar ist.

8. Vorrichtung gemäß einem der vorangehenden Ansprüche, wobei die ringförmige Dichtung (21) und/oder die weitere ringförmige Dichtung (24) des zumindest einen ersten Dichtungselements und/oder das zweite Dichtungselement (29) konzentrisch angeordnet und kreisförmig ist und/oder zumindest eines der Folgenden aufweist:
eine Lippendichtung,
einen O-Ring,
eine Wellendichtung,
einen Gleitring.

9. Vorrichtung gemäß einem der vorangehenden Ansprüche, ferner aufweisend:
ein Lager (30), das zum drehbaren Lagern der Probenkammer (9) relativ zu der Probenhalteraufnahme und/oder Probenhalter und/oder einer feststehenden Basiskomponente (31) ausgebildet ist,
wobei das Lager insbesondere außerhalb der Probenkammer dem Umgebungsdruck ausgesetzt ist,
insbesondere wobei das zweite Dichtungselement (29) zwischen dem Lager (30) und einem Probenkammerinnenraum (32) angeordnet ist.

10. Vorrichtung gemäß einem der vorangehenden Ansprüche, ferner aufweisend:
einen ersten Aktuator (33), der zum Verschwenken des Strahlungserzeugungssystems (2) mittels des ersten Goniometerarms (4) ausgebildet ist;
einen zweiten Aktuator (34), der zum Verschwenken des Detektionssystems (6) zusammen mit der damit verbundenen Probenkammer (9) mittels des zweiten Goniometerarms (8) ausgebildet ist,
wobei der erste Aktuator und/oder der zweite Aktuator außerhalb der Probenkammer angeordnet ist.

11. Vorrichtung gemäß einem der vorangehenden Ansprüche,
wobei das Strahlungserzeugungssystem (2) mittels Verschwenkens des ersten Goniometerarms (4) um bis zu zwischen 60° und 82,5°, insbesondere bis zu zwischen 70° und 82,5°, aus einer Nullposition (0°) verschwenkbar ist und/oder
wobei das Detektionssystem (6) mittels Verschwenkens des zweiten Goniometerarms (8) um bis zu zwischen 60° und 82,5°, insbesondere bis zu 70° und 82,5°, aus einer Nullposition (0°) entgegengesetzt zu einer Verschwenkungsrichtung des Strahlungserzeugungssystem verschwenkbar ist;
und/oder
wobei das Strahlungserzeugungssystem (2) außerhalb der Probenkammer angeordnet ist und Umgebungsdruck ausgesetzt ist, und/oder
wobei das Strahlungserzeugungssystem (2) eine Strahlungsquelle und eine Optik aufweist, um die primäre Strahlung mit vorbestimmtem Wellenlängenbereich und/oder vorbestimmter Querschnittsgröße zu erzeugen.

12. Vorrichtung gemäß einem der vorangehenden Ansprüche, ferner aufweisend:
mindestens einen Vakuumanschluss an der Probenkammer und/oder an dem Detektionssystem;
mindestens eine Vakuumpumpe, die ausgebildet ist, einen Druck von kleiner als 30 mbar innerhalb der Probenkammer und/oder dem Detektionsstrahlengang zu erzeugen;
und/oder
wobei das Detektionssystem (6) eine Detektionsoptik und/oder ein Filter (35) und einen Detektor (25) umfasst,
wobei das Filter (35) in dem Detektionsstrahlengang (14) angeordnet ist, insbesondere bei der ersten Öffnung (15) und/oder dem Befestigungselement (16).

13. Vorrichtung gemäß einem der vorangehenden Ansprüche, wobei der Detektor (25) des Detektionssystems (6) ein zweidimensionales oder dreidimensionales Feld von Detektorelementen aufweist, die als Punktdetektionssystem oder Zeilendetektionssystem verwendet werden;
und/oder
wobei die Vorrichtung ferner eine Steuerung (36) aufweist, die zur Durchführung einer Messung kommunikativ mit dem Strahlungserzeugungssystem und/oder dem ersten Aktuator und/oder dem Detektionssystem und/oder dem zweiten Aktuator und/oder der Vakuumpumpe verbunden ist, um Steuersignale zu übertragen und/oder Messsignale zu erhalten.

14. Vorrichtung gemäß einem der vorangehenden Ansprüche, wobei die Vorrichtung ausgebildet ist, mindestens eines der folgenden Messverfahren durchzuführen:
Röntgenbeugung (XRD), insbesondere in Bragg-Brentano-Geometrie,
Röntgenfluoreszenzanalyse (XRF),
Kleinwinkelröntgenbeugung (SAXS),
jeweils in Reflexion und/oder Transmission, und/oder
wobei die Goniometerachse (5) im Wesentlichen horizontal oder vertikal verläuft, und/oder
wobei die Probe (10) ein Pulver und/oder einen Kristall und/oder viele Kristalle und/oder eine Flüssigkeit aufweist, und während der Messung unbeweglich ist, und/oder
wobei die Probenkammer (9) im Wesentlichen zylinderförmig ist.

15. Vorrichtung gemäß einem der vorangehenden Ansprüche, wobei die Probenkammer (9) aufweist:
eine zweite Öffnung (28);
insbesondere ein zweites Dichtungselement (29), das bei einem inneren die zweite Öffnung begrenzenden Oberflächenbereich der Probenkammerwand zum Abdichten anordenbar ist,
wobei der Durchstrahlungsbereich (13) insbesondere als ein Segment einer Zylindermantelfläche gebildet ist.

## Claims

1. A device (1) for examining a sample (10) by means of X-ray radiation, comprising:
a radiation generating system (2) for generating primary radiation (3);
a first goniometer arm (4) at which the radiation generating system (2) is mounted and which is pivotable about a goniometer axis (5);
a detection system (6) which is configured for detecting secondary radiation (7) emanating from the sample;
a second goniometer arm (8) at which the detection system (6) is mounted and which is pivotable about the goniometer axis (5);
an evacuable sample chamber (9), within which the sample (10) can be arranged in a sample region (11) encompassing a part of the goniometer axis, wherein the sample chamber (9) is delimited by means of a sample chamber wall (12) which comprises a radiation transmission region (13) which is permeable to the primary radiation (3) and is vacuum-tight, in order to enable the primary radiation (3) to penetrate into the sample chamber (9) and to be able to impinge on the sample region (11) at different angles of incidence (θ_in);
wherein the sample chamber (9) comprises, in a detection beam path (14), a first opening (15) at which the sample chamber (9) and the detection system (6) can be connected in a vacuum-tight manner, such that the detection beam path (14) can be evacuated,
wherein the radiation transmission region (13) closes the sample chamber (9) in a vacuum-tight manner,
wherein the radiation transmission region (13) comprises an opening angle of between 100° and 165°,
wherein the opening angle of the radiation transmission region measures the angular extent of the radiation transmission region with respect to the goniometer axis.

2. The device according to the preceding claim, further comprising:
a connecting system (16) which is configured for a releasable vacuum-tight, in particular elastic or rigid, connection of the sample chamber (9) to the detection system (6) at the first opening (15),
wherein the connecting system comprises at least one first sealing element (21, 24),
wherein the first opening (15) is in particular circular or rectangular.

3. The device according to the preceding claim, wherein the connecting system (16) comprises an external thread (19) and a union nut (20), wherein the at least one first sealing element comprises an annular seal (21) made of elastic material which can be pressed by means of the union nut (20) for sealing, in particular between opposite end faces (22, 23).

4. The device according to one of the two preceding claims 2 or 3, wherein the connecting system (16) comprises a sleeve (17) which is arranged within the first opening (15), wherein the at least one first sealing element comprises a further annular seal (24) made of elastic material which is arranged between an inner surface of a region of the sample chamber wall (12) delimiting the first opening and an outer surface region of the sleeve (17),
wherein the sleeve (17) is connected to the detection system (6) in particular by means of the union nut (20) screwed onto the external thread (19).

5. The device according to one of the preceding claims,
wherein the radiation transmission region (13) comprises an opening angle of between 120° and 165°, in particular between 140° and 165°, and/or
wherein the radiation transmission region (13) is formed from material which is permeable to X-ray radiation, in particular comprising plastic and/or beryllium and/or light metal and/or graphite and/or aluminum,
wherein the radiation transmission region (13) is formed in particular as a segment of a cylinder lateral surface, wherein a cylinder symmetry axis lies substantially in the goniometer axis (5).

6. The device according to one of the preceding claims, further comprising at least one of the following:
a sample holder reception (26), in particular height-adjustable, which is configured to receive a sample holder; and/or
a sample holder (27), in particular height-adjustable, which can be held by means of the sample holder reception or a stationary base component and which is configured and arranged to hold the sample in the sample region (11).

7. The device according to one of the preceding claims,
wherein the sample chamber (9) comprises a second opening (28) through which a stationary base component (31) and/or the sample holder reception (26) and/or the sample holder (27) at least partially extends,
wherein the device further comprises at least one second sealing element (29), in particular annular, made of elastic material which is arranged between an outer surface region of the base component (31) and/or the sample holder reception and/or the sample holder and an inner surface region of the sample chamber wall delimiting the second opening for sealing, wherein the sample chamber is in particular removable.

8. The device according to one of the preceding claims, wherein the annular seal (21) and/or the further annular seal (24) of the at least one first sealing element and/or the second sealing element (29) is arranged concentrically and is circular and/or comprises at least one of the following:
a lip seal,
an O-ring,
a shaft seal,
a sliding ring.

9. The device according to one of the preceding claims, further comprising:
a bearing (30) which is configured for rotatably supporting the sample chamber (9) relative to the sample holder reception and/or sample holder and/or a stationary base component (31),
wherein the bearing is in particular exposed to the ambient pressure outside the sample chamber,
in particular wherein the second sealing element (29) is arranged between the bearing (30) and a sample chamber interior (32).

10. The device according to one of the preceding claims, further comprising:
a first actuator (33) which is configured for pivoting the radiation generating system (2) by means of the first goniometer arm (4);
a second actuator (34) which is configured for pivoting the detection system (6) together with the sample chamber (9) connected thereto by means of the second goniometer arm (8),
wherein the first actuator and/or the second actuator is arranged outside the sample chamber.

11. The device according to one of the preceding claims,
wherein the radiation generating system (2) is pivotable by means of pivoting the first goniometer arm (4) by up to between 60° and 82.5°, in particular up to between 70° and 82.5°, from a zero position (0°) and/or
wherein the detection system (6) is pivotable by means of pivoting the second goniometer arm (8) by up to between 60° and 82.5°, in particular up to 70° and 82.5°, from a zero position (0°) opposite to a pivoting direction of the radiation generating system;
and/or
wherein the radiation generating system (2) is arranged outside the sample chamber and is exposed to ambient pressure, and/or
wherein the radiation generating system (2) comprises a radiation source and optics for generating the primary radiation with a predetermined wavelength range and/or a predetermined cross-sectional size.

12. The device according to one of the preceding claims, further comprising:
at least one vacuum connection at the sample chamber and/or at the detection system;
at least one vacuum pump configured to generate a pressure of less than 30 mbar within the sample chamber and/or the detection beam path;
and/or
wherein the detection system (6) comprises a detection optical unit and/or a filter (35) and a detector (25),
wherein the filter (35) is arranged in the detection beam path (14), in particular at the first opening (15) and/or the fastening element (16).

13. The device according to one of the preceding claims, wherein the detector (25) of the detection system (6) comprises a two-dimensional or three-dimensional array of detector elements which are used as a point detection system or row detection system;
and/or
wherein the device further comprises a controller (36) which is communicatively connected to the radiation generating system and/or the first actuator and/or the detection system and/or the second actuator and/or the vacuum pump for carrying out a measurement in order to transmit control signals and/or to receive measurement signals.

14. The device according to one of the preceding claims, wherein the device is configured to carry out at least one of the following measurement methods:
X-ray diffraction (XRD), in particular in Bragg-Brentano geometry, X-ray fluorescence analysis (XRF),
small-angle X-ray diffraction (SAXS),
respectively in reflection and/or transmission, and/or
wherein the goniometer axis (5) runs substantially horizontally or vertically, and/or
wherein the sample (10) comprises a powder and/or a crystal and/or many crystals and/or a liquid, and is immovable during the measurement, and/or wherein the sample chamber (9) is substantially cylindrical.

15. The device according to one of the preceding claims, wherein the sample chamber (9) comprises:
a second opening (28);
in particular a second sealing element (29) which can be arranged at an inner surface region of the sample chamber wall delimiting the second opening for sealing,
wherein the radiation transmission region (13) is formed in particular as a segment of a cylinder lateral surface.

## Revendications

1. Dispositif (1) pour l'examen d'un échantillon (10) au moyen de rayons X, comprenant :
un système de génération de rayonnement (2) permettant de générer un rayonnement primaire (3) ;
un premier bras de goniomètre (4) sur lequel est monté le système de génération de rayonnement (2) et qui peut pivoter autour d'un axe de goniomètre (5) ;
un système de détection (6) conçu pour détecter le rayonnement secondaire (7) émis par l'échantillon ;
un deuxième bras de goniomètre (8) sur lequel est monté le système de détection (6) et qui peut pivoter autour de l'axe de goniomètre (5) ;
une chambre à échantillon (9) pouvant être mise sous vide, à l'intérieur de laquelle l'échantillon (10) peut être agencé dans une région d'échantillon (11) comprenant une partie de l'axe de goniomètre, dans lequel la chambre à échantillon (9) est délimitée au moyen d'une paroi de chambre à échantillon (12) qui présente une région de radiographie (13) perméable au rayonnement primaire (3) et étanche au vide, afin de permettre au rayonnement primaire (3) de pénétrer dans la chambre à échantillon (9) et de frapper la région d'échantillon (11) sous différents angles d'incidence (θ_ein) ;
dans lequel la chambre à échantillon (9) présente, sur un trajet de faisceau de détection (14), une première ouverture (15) avec laquelle la chambre à échantillon (9) et le système de détection (6) peuvent être reliés de manière étanche au vide, de sorte que le trajet de faisceau de détection (14) peut être mis sous vide,
dans lequel la région de radiographie (13) ferme la chambre à échantillon (9) de manière étanche au vide,
dans lequel la région de radiographie (13) présente un angle d'ouverture compris entre 100° et 165°,
dans lequel l'angle d'ouverture de la région de radiographie mesure l'extension angulaire de la région de radiographie par rapport à l'axe de goniomètre.

2. Dispositif selon la revendication précédente, comprenant en outre :
un système de liaison (16) conçu pour relier de manière étanche au vide, en particulier de manière élastique ou rigide, et de manière amovible la chambre à échantillon (9) au système de détection (6) au niveau de la première ouverture (15), dans lequel le système de liaison présente au moins un premier élément d'étanchéité (21, 24),
dans lequel la première ouverture (15) est en particulier circulaire ou rectangulaire.

3. Dispositif selon la revendication précédente, dans lequel le système de liaison (16) présente un filetage extérieur (19) et un écrou-raccord (20), dans lequel le au moins un premier élément d'étanchéité présente un joint annulaire (21) en matériau élastique qui peut être pressé au moyen de l'écrou-raccord (20) en vue de l'étanchéification, en particulier entre des surfaces frontales (22, 23) se faisant face.

4. Dispositif selon l'une quelconque des deux revendications précédentes 2 ou 3, dans lequel le système de liaison (16) comprend un manchon (17) agencé à l'intérieur de la première ouverture (15), dans lequel le au moins un premier élément d'étanchéité présente un joint annulaire (24) supplémentaire en matériau élastique, qui est agencé entre une surface intérieure d'une région de la paroi de la chambre à échantillon (12) délimitant la première ouverture et une région de surface extérieure du manchon (17),
dans lequel le manchon (17) est relié au système de détection (6), en particulier au moyen de l'écrou-raccord (20) vissé sur le filetage extérieur (19).

5. Dispositif selon l'une quelconque des revendications précédentes,
dans lequel la région de radiographie (13) présente un angle d'ouverture compris entre 120° et 165°, en particulier entre 140° et 165° et/ou
dans lequel la région de radiographie (13) est formée d'un matériau perméable aux rayons X, en particulier de plastique et/ou de béryllium et/ou de métal léger et/ou de graphite et/ou d'aluminium,
dans lequel la région de radiographie (13) présente en particulier la forme d'un segment d'une surface latérale de cylindre, dans lequel un axe de symétrie de cylindre se situe essentiellement dans l'axe de goniomètre (5).

6. Dispositif selon l'une quelconque des revendications précédentes, comprenant en outre au moins un des éléments ci-dessous :
un logement de porte-échantillon (26), en particulier réglable en hauteur, conçu pour accueillir un porte-échantillon ; et/ou
un porte-échantillon (27), en particulier réglable en hauteur, qui peut être retenu au moyen du logement de porte-échantillon ou d'un composant de base fixe et qui est conçu et agencé pour retenir l'échantillon dans la région d'échantillon (11).

7. Dispositif selon l'une quelconque des revendications précédentes,
dans lequel la chambre à échantillon (9) présente une deuxième ouverture (28) à travers laquelle s'étend au moins partiellement un composant de base fixe (31) et/ou le logement de porte-échantillon (26) et/ou le porte-échantillon (27),
dans lequel le dispositif présente en outre au moins un deuxième élément d'étanchéité (29), en particulier annulaire, en matériau élastique, qui est agencé en vue d'une étanchéification entre une région de surface extérieure du composant de base (31) et/ou du logement de porte-échantillon et/ou du porte-échantillon et une région de surface intérieure, délimitant la deuxième ouverture, de la paroi de chambre à échantillon,
dans lequel la chambre à échantillon peut en particulier être retirée.

8. Dispositif selon l'une quelconque des revendications précédentes, dans lequel le joint annulaire (21) et/ou le joint annulaire (24) supplémentaire du au moins un premier élément d'étanchéité et/ou du deuxième élément d'étanchéité (29) est agencé de manière concentrique et est circulaire et/ou présente au moins un des éléments ci-dessous :
un joint à lèvre,
un joint torique,
un joint pour arbre,
une bague coulissante.

9. Dispositif selon l'une quelconque des revendications précédentes, comprenant en outre :
un palier (30) conçu pour mettre sur palier la chambre à échantillon (9) de manière à ce qu'elle puisse tourner par rapport au logement de porte-échantillon et/ou au porte-échantillon et/ou à un composant de base fixe (31),
dans lequel le palier est en particulier exposé à la pression ambiante à l'extérieur de la chambre à échantillon,
en particulier dans lequel le deuxième élément d'étanchéité (29) est agencé entre le palier (30) et un espace intérieur de chambre à échantillon (32).

10. Dispositif selon l'une quelconque des revendications précédentes, comprenant en outre :
un premier actionneur (33) conçu pour faire pivoter le système de génération de rayonnement (2) au moyen du premier bras de goniomètre (4) ;
un deuxième actionneur (34) conçu pour, au moyen du deuxième bras de goniomètre (8), faire pivoter le système de détection (6) en commun avec la chambre à échantillon (9) à laquelle il est relié,
dans lequel le premier actionneur et/ou le deuxième actionneur sont agencés à l'extérieur de la chambre à échantillon.

11. Dispositif selon l'une quelconque des revendications précédentes,
dans lequel le système de génération de rayonnement (2) peut être pivoté à partir d'une position zéro (0°) jusqu'à un angle compris entre 60° et 82,5°, en particulier jusqu'à un angle compris entre 70° et 82,5°, au moyen d'un pivotement du premier bras de goniomètre (4), et/ou
dans lequel le système de détection (6) peut être pivoté à l'encontre d'une direction de pivotement du système de génération de rayonnement, à partir d'une position zéro (0°) jusqu'à un angle compris entre 60° et 82,5°, en particulier jusqu'à un angle compris entre 70° et 82,5, au moyen d'un pivotement du deuxième bras de goniomètre (8)°; et/ou
dans lequel le système de génération de rayonnement (2) est agencé à l'extérieur de la chambre à échantillon et est exposé à la pression ambiante, et/ou
dans lequel le système de génération de rayonnement (2) présente une source de rayonnement et une optique afin de générer le rayonnement primaire avec une plage de longueurs d'onde prédéterminée et/ou une taille de section transversale prédéterminée.

12. Dispositif selon l'une quelconque des revendications précédentes, comprenant en outre :
au moins une liaison sous vide au niveau de la chambre à échantillon et/ou du système de détection ;
au moins une pompe à vide conçue pour générer une pression inférieure à 30 mbar à l'intérieur de la chambre à échantillon et/ou sur le trajet de faisceau de détection ; et/ou
dans lequel le système de détection (6) comprend une optique de détection et/ou un filtre (35) et un détecteur (25),
dans lequel le filtre (35) est agencé sur le trajet de faisceau de détection (14), en particulier au niveau de la première ouverture (15) et/ou de l'élément de fixation (16).

13. Dispositif selon l'une quelconque des revendications précédentes, dans lequel le détecteur (25) du système de détection (6) présente un champ bidimensionnel ou tridimensionnel d'éléments de détection qui sont utilisés comme système de détection de point ou comme système de détection de ligne ; et/ou
dans lequel le dispositif présente en outre une commande (36) qui est reliée au système de génération de rayonnement et/ou au premier actionneur et/ou au système de détection et/ou au deuxième actionneur et/ou à la pompe à vide de manière à pouvoir communiquer afin de transmettre des signaux de commande et/ou d'obtenir des signaux de mesure, en vue de la mise en œuvre d'une mesure.

14. Dispositif selon l'une quelconque des revendications précédentes, dans lequel le dispositif est conçu pour mettre en œuvre au moins un des procédés de mesure ci-dessous :
diffraction de rayons X (XRD), en particulier avec une géométrie de Bragg-Brentano,
analyse par fluorescence X (XRF),
diffraction de rayons X aux petits angles (SAXS),
respectivement en réflexion et/ou en transmission, et/ou
dans lequel l'axe de goniomètre (5) s'étend de manière essentiellement horizontale ou verticale, et/ou
dans lequel l'échantillon (10) comprend une poudre et/ou un cristal et/ou plusieurs cristaux et/ou un liquide et est immobile pendant la mesure, et/ou
dans lequel la chambre à échantillon (9) est essentiellement cylindrique.

15. Dispositif selon l'une quelconque des revendications précédentes, dans lequel la chambre à échantillon (9) comprend :
une deuxième ouverture (28) ;
en particulier un deuxième élément d'étanchéité (29) qui peut être agencé en vue d'une étanchéification dans une région de surface intérieure, délimitant la deuxième ouverture, de la paroi de chambre à échantillon,
dans lequel la région de radiographie (13) présente en particulier la forme d'un segment d'une surface latérale de cylindre.
